# EUROPEAN PATENT APPLICATION

(11) **EP 2 620 854 A1**
(43) Date of publication of application: **31.07.2013**
(21) Application number: 11826685.7
(22) Date of filing: 29.08.2011
(51) Int. Cl.: G06F 3/048, G09G 5/00, G09G 5/14

(54) **DISPLAY SCREEN MANAGEMENT MODULE, INFORMATION PROCESSING TERMINAL AND DISPLAY SCREEN MANAGEMENT METHOD**

(30) Priority: 24.09.2010 JP 2010213928
(71) Applicant: NEC Corporation, Tokyo 108-8001 (JP)
(72) Inventor: TOMIMORI, Hiroyuki, Tokyo 108-8001 (JP); FUJIWAKA, Masaya, Tokyo 108-8001 (JP)
(74) Representative: Vossius & Partner
(86) International application number: PCT/JP2011/069404
(87) International publication number: WO 2012/039239

(57) **Abstract**

Provided is a display screen management module that solves the problem of trouble that a user has to take for displaying a window on a screen that is convenient for the user. Display screen management module 14 includes: a setting unit 21 in which a policy designating a screen for displaying a window generated by information processing terminal 1 is set; and manager 22 that determines, in accordance with the policy in setting unit 21, the screen for displaying the window.

## Description

### Technical Field

The present invention relates to a display screen management module, an information processing terminal, and a display screen management method for determining a screen for displaying a window from among a plurality of screens.

### Background Art

Some of information processing terminals such as mobile phones and PCs (Personal Computers) are provided with a plurality of screens. In such an information processing terminal, a window generated by, e.g., an application program (hereinafter abbreviated as an application) is displayed on any one of the screens or displayed across the screens. If a screen for displaying a window is randomly selected, the window may be displayed on a screen inconvenient for a user.

To address this, a multi-display system described in Patent Literature 1 makes a user designate, for each application, a screen for displaying a window of the application, and displays the window on the designated screen. This allows a window to be displayed on a screen that is convenient for the user.

### Citation List

### Patent Literature

Patent Literature 1: JP2008-164988A

### Summary of Invention

### Technical Problem

The multi-display system described in Patent Literature 1 poses a problem: a user has to take the trouble to designate a screen for displaying a window for each application. Although a screen for displaying a window may be designated in advance for each application, such an approach is likely to be unfeasible because of the large number of applications.

An object of the present invention is to provide a display screen management module, an information processing terminal, and a display screen management method that solve the above problem, i.e., a user has to make troublesome effort to display a window on a screen which is convenient for the him/her.

### Solution to Problem

A display screen management module according to the present invention is a display screen management module for use in an information processing terminal with a plurality of screens, the module including: a setting unit in which a policy designating a screen for displaying a window generated by the information processing terminal is set; and a manager that determines, in accordance with the policy, the screen for displaying the window.

An information processing terminal according to the present invention includes: an information processor that generates the window; and a screen controller that displays the window generated by the information processor on the screen determined by the display screen management module.

A display screen management method according to the present invention is a display screen management method for a display screen management module for use in an information processing terminal with a plurality of screens, wherein a policy designating a screen for displaying a window generated by the information processing terminal is set, the method including determining the screen for displaying the window in accordance with the policy.

### Advantageous Effect of Invention

The present invention enables reducing the troublesome effort that a user has to take for displaying a window on a screen that is convenient for the user.

### Brief Description of Drawings

Figure 1 is a block diagram showing a configuration of information processing terminal 1 in a first exemplary embodiment of the present invention.
Figure 2 is a front view showing an exemplary exterior of information processing terminal 1.
Figure 3 is a diagram showing exemplary window display.
Figure 4 is a diagram showing an exemplary policy description.
Figure 5 is a flowchart for describing exemplary operations of information processing terminal 1.

### Description of Embodiment

An exemplary embodiment of the present invention will be described below with reference to the drawings. In the following description, elements with the same function may be given the same symbols and may not be repeatedly described.

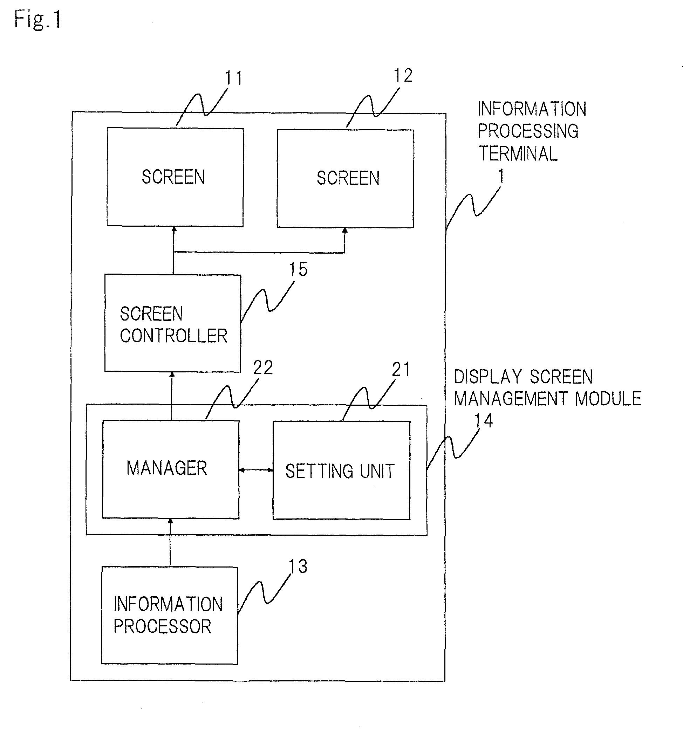

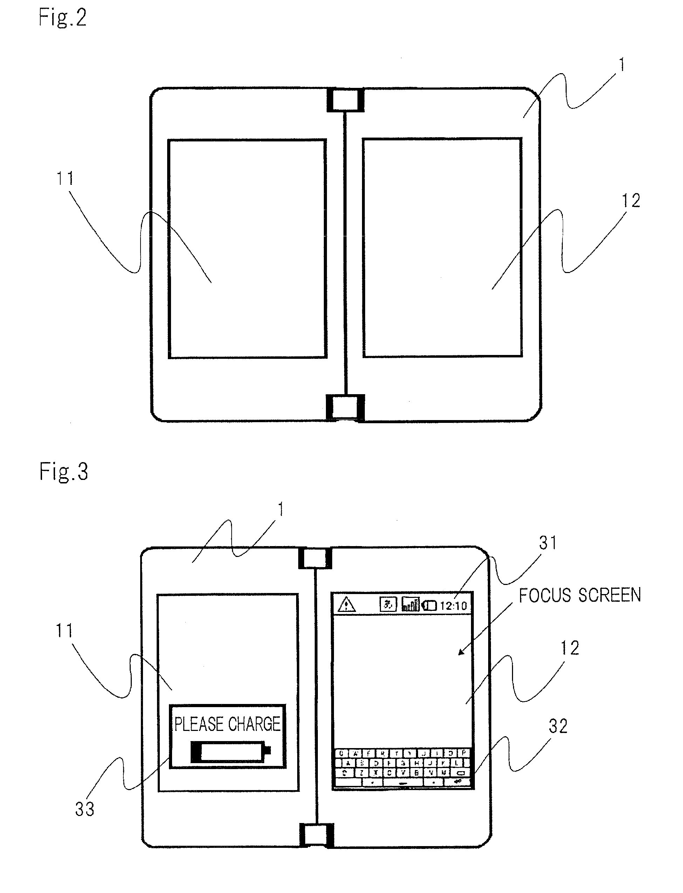

Figure 1 is a block diagram showing a configuration of an information processing terminal in a first exemplary embodiment of the present invention. In Figure 1, information processing terminal 1 includes screens 11 and 12, information processor 13, display screen management module 14, and screen controller 15. Although only two screens are shown in Figure 1, there may be two or more screens in practice. Information processing terminal 1 may be configured with a single body on which a plurality of screens are provided, or, as shown in Figure 2, may be configured with a plurality of bodies connected with each other to be openable and closable, where each body is provided with one screen.

Screens 11 and 12 may be integrated with touch panels. Screen 11 may be referred to as primary screen 11, while screen 12 may be referred to as secondary screen 12.

Information processor 13 is implemented by a computer (such as a CPU (Central Processing Unit)) executing a program (such as an application or an OS (Operating System)), and performs various sorts of information processing.

For example, information processor 13 generates windows to be displayed on screens 11 and 12, and manages a focus screen, and display modes and positions of windows being displayed on screens 11 and 12.

The focus screen is an active screen on which an input and operation are performed. The focus screen is set to be any one of screens 11 and 12 upon startup of information processing terminal 1 and thereafter may be switched when a user touches the screen or when an application is started. Thus, the focus screen is a screen that the user touched last, or, if an active window is being displayed, is a screen that is displaying the active window. The focus screen is likely to be used or viewed by the user.

The display modes of a window include, for example, a dual screen mode in which the window is displayed across screens 11 and 12, and a single screen mode in which the window is displayed on only one of screens 11 and 12.

Display screen management module 14 is a software module that determines, in accordance with policies for designating a screen for displaying a window, a screen for displaying a window generated by information processor 13.

Display screen management module 14 includes setting unit 21 and manager 22, which provide functions to be described below.

Setting unit 21 has the above-mentioned policies set therein. In setting unit 21, a different policy (or policy group) may be set for each window type. Window types may include dialog, menu, software keyboard, status bar, and toast. The policies may be changeable by the user of information processing terminal 1 or may be fixed.

Manager 22 determines, in accordance with the policies set in setting unit 21, a screen for displaying the window generated by information processor 13.

Screen controller 15 displays the window generated by information processor 13 on the screen determined by manager 22.

Now, the policies will be described in more detail.

The exemplary embodiment assumes that the policies include a first policy designating a screen depending on a caller of the window, and a second policy designating a predetermined screen irrespective of the caller of the window.

The caller of the window in the first policy is another window or a non-window caller. Another window that calls a window is referred to as a parent window, while the called window is referred to as a child window.

The first policy may designate a screen depending on the display mode of the parent window if the caller of the window is a parent window. For example, if the parent window is in the dual screen mode, in which the parent window is displayed across screens 11 and 12, the first policy designates a predetermined screen. If the parent window is in the single screen mode, in which the parent window is displayed on only one of screens 11 and 12, the first policy designates the screen on which the parent window is displayed.

The predetermined screen in the first and second policies may be a fixed screen that is either preset screen 11 or preset screen 12 or may be the focus screen.

Preferred examples of policies for displaying a window on a screen convenient for the user may include the following.

For example, as a policy for status bar 31 or software keyboard 32 as shown in Figure 3, the second policy that designates the focus screen is preferred.

As a policy for a dialog, the first policy is preferred that designates a screen depending on the display mode of the parent window if the caller of the window is a parent window, and that designates a fixed screen (e.g., primary screen 11) if the caller of the window is not a parent window. In this case, as shown in Figure 3, a notification called by the OS, such as error dialog 33, is always displayed on the fixed screen, and a dialog called by an application is displayed on the screen depending on the display mode of the parent window of the application.

The above-mentioned policies and the relationships between the policies and the window types are merely examples, and the present invention is not limited to these examples.

For example, a policy may designate a screen depending on how information processing terminal 1 is used when the window is displayed (such as how the terminal is held or placed, or to what degree the terminal is opened). As another example, a policy may designate a different screen depending on whether information processing terminal 1 is used on a desk while half-opened as in the case of a notebook PC (Personal Computer) or used while held by a hand. A policy may designate a different screen depending on whether information processing terminal 1 is used while primary screen 11 is located below or which secondary screen 12 is located below.

With the policies as described above, information processing terminal 1 includes a sensor for detecting information about the use of the terminal, and manager 22 determines the screen for displaying the window in accordance with the detection result of the sensor. Exemplary sensors may include a triaxial acceleration sensor, a magnetic sensor, and a direction sensor that detect the posture of information processing terminal 1, and an angle sensor that detects the opening/closing angle between the bodies of the terminal.

For some window types, a policy may be set such that the same window is displayed on both of screens 11 and 12, rather than on only screens 11 and 12. An example of such a window may be a window of an error dialog containing an important notification called by the system.

A policy may designate a screen depending on a currently displayed window. For example, if the caller of the window belongs to an application task (an application group) of another window currently displayed, the policy may designate the same screen as a screen displaying the other window.

The above-described policies are desirably written in a markup language such as XML (Extensible Markup Language) for easy customization for each different type of information processing apparatus. The types of information processing apparatuses may include, for example, notebook PC (Personal Computer), book-style mobile terminal, and slidable dual-screen terminal. For example, customization may be made such that, in one type of information processing apparatus, an error dialog provided by the system (OS) is displayed on the right screen, while in another type of information processing apparatus, such an error dialog is displayed on the left screen.

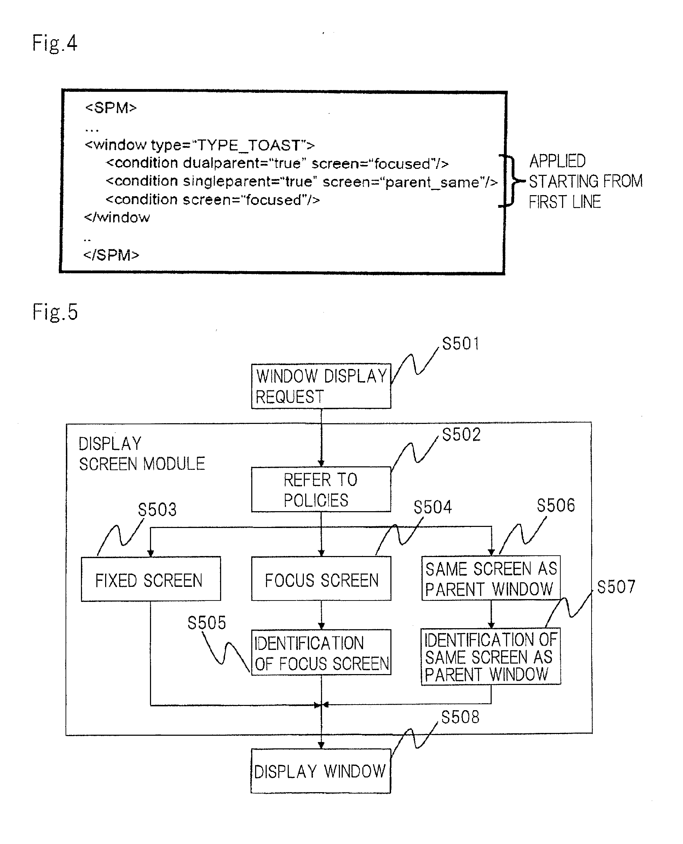

Figure 4 is a diagram showing an exemplary policy description in XML.

In Figure 4, the portion between <SPM> and </SPM> indicates the entity of policies. The portion between <window type = "TYPE_XXX"> and </window> indicates the policies that are set for a window of a type "XXX." In Figure 4, TOAST is written as the window type.

Each line (from "<" to "/>") between <window type = "TYPE TOAST"> and </window> indicates a policy. A policy includes a condition (condition YYY = "true (or false)") and a screen type (screen = "ZZZ"). If the window meets the condition, manager 22 determines the screen for displaying the window in accordance with the screen type that corresponds to the condition.

For example, the policy in the first line designates the focus screen (focused) if the parent window of the window is in the dual screen display mode (dualparent). The policy in the second line designates a screen displaying the parent window (parent_same) if the parent window of the window is in the single screen display mode (singleparent). The policy in the third line designates the focus screen.

When a plurality of policies exist as shown in Figure 4, manager 22 determines, in order of priority of the policies, whether or not the condition is met. If it is determined that the condition is met, a designated screen corresponding to the condition is determined as the screen for displaying the window. In Figure 4, policies in higher lines have higher priorities.

Now, operations of information processing terminal 1 will be described.

Figure 5 is a flowchart for describing exemplary operations of information processing terminal. 1.

First, information processor 13 generates a window display request that specifies a window, and sends the window display request to manager 22 (step S501).

Manager 22 receives the window display from request and determines a screen type for the window with reference to a policy corresponding to the type of the window in the window display request among policies that are set in setting unit 21. Here, it is assumed that the screen type is any one from among a fixed screen, the focus screen and the same screen as a screen displaying a parent window.

More specifically, in order of priority of the policies, manager 22 determines whether or not the window meets a condition that corresponds to the window type. If it is determined that the condition is met, a screen type corresponding to the condition is determined as the type of the screen for displaying the window (step S502).

If the screen for displaying the window is the fixed screen, manager 22 adds designation information designating the fixed screen to the display request and sends the display request with the added information to screen controller 15 (step S503).

If the screen for displaying the window is the focus screen (step S504), manager 22 obtains identification information from information processor 13 indicating the focus screen. Manager 22 adds designation information designating the screen identified by the identification information to the display request and sends the display request with the added information to screen controller 15 (step S505).

If the screen for displaying the window is the same screen as the screen displaying the parent window (step S506), manager 22 obtains identification information from information processor 13 indicating the screen displaying the parent window. Manager 22 adds designation information designating the screen identified by the identification information to the display request and sends the display request with the added information to screen controller 15 (step S507).

Screen controller 15 receives the display request and displays the window in accordance with the display request on the screen designated by the designation information in the display request (step S508).

Thus, as described above, according to the exemplary embodiment, display screen management module 14 includes: setting unit 21 in which policies designating a screen for displaying a window generated by information processing terminal 1 are set; and manager 22 that determines, in accordance with the policies in setting unit 21, the screen for displaying the window.

In this manner, the screen for displaying the window is determined in accordance with the policies. Consequently, the window can be displayed on the screen convenient for the user without requiring the user to designate the screen for displaying the window and without requiring preliminary designation of the screen for displaying the window for each application. Therefore, the trouble the user has to take for displaying the window on a screen that is convenient for the user can be reduced. Since the policies are set in display screen management module 14, display screen management module 14 can be applied to various products to customize the policies for each product. This allows the screen that is displaying the window to be easily customized on a product basis.

In the exemplary embodiment, the policies are written in a markup language and therefore can be easily customized.

In the exemplary embodiment, the policies are set in setting unit 21 for each window type. This allows fine-grained setting of the screen that is displaying the window, thereby improving the convenience.

Thus, in addition to the reduction of the trouble the user has to take to display the window on the screen that is convenient for the user, the high customizability of the exemplary embodiment allows product developers to provide products with reduced development time and effort so that a variety of products can be developed.

The functions of information processing terminal 1 described above may be implemented in such a manner that a program for implementing the functions is recorded on a computer-readable recording medium and is read into a computer to be executed. Computer-readable recording media refer to recording media such as a flexible disk, a magneto-optical disk, and a CD-ROM, and a recording device provided in a computer system, such as a hard disk. Computer-readable recording media further include a medium that temporarily and dynamically holds the program (such as a transmission medium or a transmission wave) as in the case of transmitting the program via the Internet, as well as a medium that holds the program for a certain period of time, such as volatile memory in a computer that acts as a server in such a case.

While the present invention has been described above with reference to the exemplary embodiment, the present invention is not limited to the above exemplary embodiment. Various modifications that may be understood by those skilled in the art within the scope of the present invention may be made to the configurations and details of the present invention.

This application claims priority to Japanese Patent Application No. 2010-213928 filed on September 24, 2010, the disclosure of which is incorporated herein in its entirety.

## Claims

1. A display screen management module for use in an information processing terminal with a plurality of screens, the module comprising:
a setting unit in which a policy designating a screen for displaying a window generated by the information processing terminal is set; and
a manager that determines, in accordance with the policy, the screen for displaying the window.

2. The display screen management module according to claim 1, wherein the policy is set for each window type in the setting unit.

3. The display screen management module according to claim 2, wherein the policy comprises a first policy that designates a screen depending on a caller of the window.

4. The display screen management module according to claim 3, wherein if the caller of the window is another window, the first policy designates a screen displaying the other window.

5. The display screen management module according to claim 4, wherein if the caller of the window is the other window and if the other window is displayed on only one screens from among the plurality of screens, the first policy designates the screen displaying the other window.

6. The display screen management module according to claim 5, wherein if the caller of the window is the other window and if the other window is displayed across the plurality of screens, the first policy designates a predetermined screen.

7. The display screen management module according to any one of claims 3 to 6, wherein if the caller of the window is not a window, the first policy designates a predetermined screen.

8. The display screen management module according to any one of claims 2 to 7, wherein the policy comprises a second policy that designates a predetermined screen.

9. The display screen management module according to any one of claims 6 to 8, wherein the predetermined screen comprises a preset fixed screen.

10. The display screen management module according to any one of claims 6 to 9, wherein the predetermined screen comprises a focus screen.

11. The display screen management module according to any one of claims I to 10, wherein the policy is written in a markup language.

12. An information processing terminal comprising:
the display screen management module according to any one of claims 1 to 11;
an information processor that generates the window; and
a screen controller that displays the window generated by said information processor on the screen determined by said display screen management module.

13. A display screen management method for a display screen management module for use in an information processing terminal with a plurality of screens, wherein
a policy designating a screen for displaying a window generated by the information processing terminal is set, the method comprising
determining the screen for displaying the window in accordance with the policy.
